# EUROPEAN PATENT SPECIFICATION

(11) **EP 0 503 289 B1**
(45) Date of publication and mention of the grant of the patent: **17.01.1996**
(21) Application number: 92102260.4
(22) Date of filing: 11.02.1992
(51) Int. Cl.: F21P 7/00

(54) **Method and apparatus for forming a fog screen and image-forming method using the same**
Verfahren und Gerät zur Erzeugung von Projektionsschirmen durch Nebel und ein Bilderzeugungsverfahren, welches einen solchen Schirm verwendet
Méthode et dispositif pour mise en forme d'un écran créé par un brouillard et procédé de formation d'images utilisant un tel écran

(30) Priority: 15.03.1991 JP 77044/91
(43) Date of publication of application: 16.09.1992
(73) Proprietor: USHIO U-TECH INC., Tokyo 101 (JP); DENTSU PROX INC., Chuo-ku Tokyo 104 (JP)
(72) Inventor: Kataoka, Akira, c/o Ushio U-Tech Inc.,, Kita-ku, Osaka-shi, Osaka 530 (JP); Kasahara, Yasuhiro, Tokyo 145 (JP)
(74) Representative: Füchsle, Klaus, Dipl.-Ing.

(56) References cited:
- EP-A- 0 337 480
- DE-C- 476 372
- FR-A- 429 860
- PATENT ABSTRACTS OF JAPAN vol. 14, no. 494 (P-1123)26 October 1990 & JP-A-2 201 488 ( ISHIKAWAJIMA HARIMA HEAVY IND. ) 9 August 1990
- PATENT ABSTRACTS OF JAPAN vol. 14, no. 498 (P-1124)30 October 1990 & JP-A-2 204 775 ( ISHIKAWAJIMA HARIMA HEAVY IND. ) 14 August 1990

## Description

### BACKGROUND OF THE INVENTION

The present invention relates to a method and apparatus for forming a fog screen and an image-forming method using the same. More particularly, the invention relates to a method and apparatus for forming a fog screen for use in the projection for display of an optical image from a projector and an image-forming method using the same.

### BRIEF DESCRIPTION OF THE PRIOR ART

There is known a technique of forming a two-dimensional water-film screen by driping (or ejecting jets of) water from a plurality of nozzles and projecting an optical image from a projector on the resulting screen in lieu of an ordinary cinematographic or other screen in the form of a sheet or a board. Such a water-film screen is suitable for outdoor large-scale displays but in a confined indoor space the formation of such a screen is accompanied with high water noise so that no satisfactory sound effect can be superimposed. Furthermore, as the spectators or audience cannot walk through the screen, the real cinematographic effect with "presence" may not be obtained.

In view of these problems, it has been proposed to form a fog screen by blowing a fog (dry ice or the like) from a linear series of nozzles and use it as the screen for receiving an optical image from a projector (Japanese Kokai Utility Model Publication No. 2-44731). Such a fog screen does not involve any appreciable noise and the spectators or audience may freely walk through it, thus insuring a dramatic cinematographic effect.

However, this prior art fog screen is disadvantageous in that the fog exhaled from the nozzles diffuse into the ambient air owing to atmospheric resistance as it travels far and away from the nozzles and the consequent increase in thickness of the fog results in a decrease in its density. Therefore, the projected image becomes increasingly blurred with an increasing distance from the nozzles, although it is sharp and in focus in the neighborhood of the nozzles, thus failing to provide a homogeneous and sharp image reproduction. Moreover, the fog is unstable in the air and vulnerable to air currents so that the image tends to be distorted or interrupted. This tendency is particularly pronounced when such a screen is formed outdoors. Thus, cinematography using such a prior art screen has so far found application only in cases where the goal is not a faithful reproduction of images but enlivened scenes with dramatic or surprise effects are to be emphasized.

A prior art that overcomes the above drawbacks is that disclosed in EP-A-O 337 480 that is concerned with an apparatus and method of forming a fog screen for use in the projection for display of an optical image from a projector, which comprises creating a pair of parallel moving air curtains with a spacing therebetween and blowing fog into a space defined by and between said air curtains.

### SUMMARY OF THE INVENTION

It is an object of the present invention to provide an improved apparatus and method for forming a fog screen for use in the projection for display of an optical image from a projector.

The apparatus of the present invention is as defined in the accompanying Claim 1 that has been divided into a two part form based on the assumption that EP-A-O 337 480 is the nearest state of the art.

The method of the present invention is as defined in the accompanying Claim 5 that has been divided into a two part form based on the assumption that EP-A-O 337 480 is the nearest state of the art.

### BRIEF DESCRIPTION OF THE DRAWINGS

Fig. 1 is a schematic diagram illustrating an image reproducing system employing the method of producing a fog screen in accordance with the invention;
Fig. 2 is a front view showing an example of the expirator employed in said system;
Fig. 3 is a schematic end view taken along the line A-A of Fig. 2, showing the operation of the expirator; and
Fig. 4 is a front view showing an example of the aspirator.

### DETAILED DESCRIPTION OF THE INVENTION

The present invention will now be described in detail with reference to the accompanying drawings illustrating a preferred embodiment.

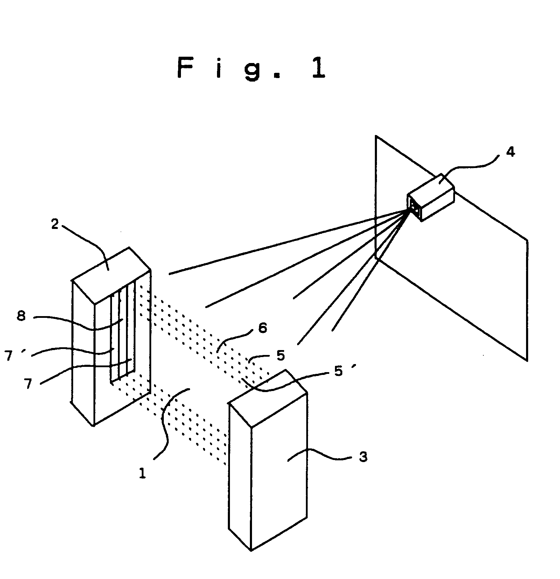

Fig. 1 is a schematic diagram showing the reproduction of an image using the fog screen formed by the method of the invention. As illustrated, a fog screen 1 is formed between a fog expirator 2 and an aspirator 3 so that an optical image may be projected from a cinematographic or other projector on the fog screen 1. The fog screen 1 consists of two air curtains 5,5' exhaled from air outlets 7,7' of the expirator 2 and traveling substantially in parallel relation toward the aspirator 3 and a fog 6 exhaled from a fog outlet 8 of the expirator 2 into the space defined by and between said air curtains 5,5'.

The various components of the system illustrated in Fig. 1 are now described in detail.

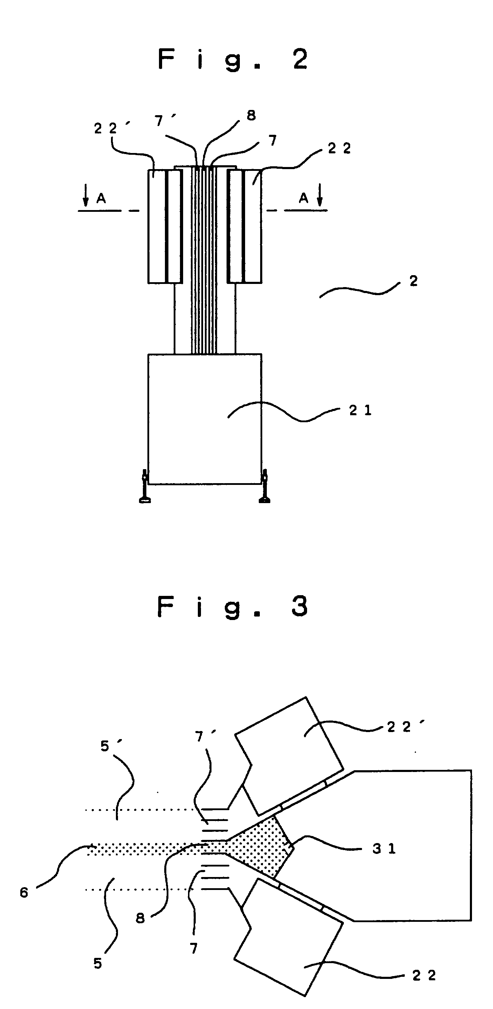

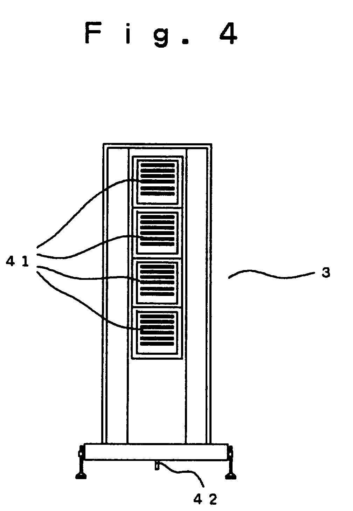

Fig. 2 is a front view showing an example of the expirator 2 and Fig. 3 is a schematic end view (on a scale different from that of Fig. 2) which illustrates the operation of the expirator 2. The expirator 2 comprises a base 21 having a built-in water tank in base 21, a fog outlet 8 for blowing a fog 6, and air outlets 7,7' for developing air curtains 5,5' disposed on both sides of said fog outlet 8 along the axial direction of the expirator 2. The axial length of the fog outlet 8 and air outlets 7,7' can be set to an optional value according to the desired height of the fog screen 1, and the height of the base 21 can also be chosen as desired according to the desired height of the fog screen 1. Disposed in a single axially aligned row within the fog outlet 8 are a plurality of nozzles 31 (one of which is shown) for exhaling the fog 6. These nozzles 31 may be the conventional nozzles but in order to insure an increased sharpness of the reproduced image, are preferably such that the fog 6 will be formed of water droplets or particles with a mean diameter of about 10 to 30 microns. Furthermore, where the fog screen 1 is to be installed in such a manner that the audience may freely walk through the screen, a fog with a mean particle diameter of less than 10 microns (the so-called dry fog) is preferably used as the fog 6. Since the dry fog is characterized in that it does not wet the surface of an object coming into contact therewith, the audience walking through the screen 1 is not wetted by the fog. Production of the dry fog can be achieved using ordinary commercial dry fog nozzles. Such dry fog nozzles utilize a compressed air which is ejected at a high speed to atomize water into finely divided particles and such a typical nozzle is commercially available under the trademark of AKI JET (Ikeuchi K.K., Japan).

The air curtains 5,5' can be formed in the per se conventional manner. Thus, the air curtains 5,5' are produced as air is blown from said air outlets 7,7' on both sides of the fog outlet 8 of said expirator 2. The air to be expired is supplied under pressure by means of fans 22,22' of the expirator 2. The spacing between the air outlets 7 and 7', that is to say the interval of the two air curtains 5,5', is set generally to about 5 to 200 mm, preferably to about 10 to 150 mm, and for still better results, to about 30 to 100 mm. If the interval is less than 5 mm, it will be technically difficult to produce the fog screen 1. Conversely, if the interval exceeds 200 mm, the diffusion of the fog 6 in the vertical direction of the fog screen 1 may become too great to maintain the uniform density of fog 6 in the screen 1. To prevent this diffusion, it is recommended to provide further air outlets above and/or below the air outlets 7,7' to form air curtains and exhale a further amount of fog 6 into the space defined by the air curtains.

Fig. 4 is a front view showing an example of the aspirator 3 disposed in the position confronting the expirator 2. As shown, the front side of the aspirator 3 is provided with a plurality of aspirating orifices 41 from which the fog 6 and the air of air curtains 5,5' are aspirated. This aspirator 3 not only serves to prevent increase of humidity due to the expired fog 6 but also controls the flow of the fog 6 and of the air curtains 5,5'. Disposed within the aspirator 3 are a plurality of carriers (for example, wire-mesh screens) so that the fog 6 aspirated through the orifices 41 and brought into contact with the carriers is converted to water which, in turn, can be discarded from a drain 42.

The projector 4 is not limited in kind but any of the usual projectors can be successfully employed.

For the projection of an image using the above system, the expirator 2 and the aspirator 3 are disposed at a suitable distance from each other and air is blown from the air outlets 7,7' of the expirator 2 to form air curtains 5,5', while a fog 6 is exhaled from the fog outlet 8 into the space between said air curtains 5,5' to form a fog screen 1. Since the diffusion of the fog 6 is restricted by the air curtains 5,5', the fog screen 1 is uniform and high in density. As an optical image is projected from the projector 4 on this fog screen 1, the imagewise light is reflected by the fog 6 so that the spectators or audience can view the reflected image.

The projection of an optical image from the projector 4 on the fog screen 1 can be effected from either the audience side or the other side, but in the former case the amount of transmitted light is relatively large and the reflected light is relatively small so that the definition of the image is sacrificed. Therefore, projection from the side of the fog screen which is opposite to the audience is preferred.

The present invention is not limited to the above specific embodiment but many changes and modifications may be made within the scope of the accompanying claims.

In the present invention, the diffusion of the fog is precluded by the air curtains to insure a welldefined image even in ppsitions remote from the fog outlet. Moreover, as the fog is secluded from the ambient atmosphere by the air curtains, the distortion and interruption of the image due to accidental air currents is prevented. Therefore, the invention provides a fog screen which insures a sharp image reproduction and enables the audience to walk through it freely, thus contributing to dramatic effects.

## Claims

1. Apparatus for forming a fog screen (1) for the display thereon of an optical image projected from a projector (4) comprising:
an expirator device (2) having a pair of spaced vertically extending air nozzles (7,7'), fan means (22, 22') for supplying air under pressure to said air nozzles (7,7') to form a pair of spaced and parallel extending curtains (5, 5') of air, a vertically extending fog outlet (8) between said air nozzles (7,7'), fog generating nozzle means for generating fog (6) from water supply means and expelling it through said fog outlet (8) to form a fog screen (6) in the space between said air curtains (5, 5') and;
an aspirator device (3) spaced horizontally from said expirator device (2), said aspirator device (3) having a plurality of aspirating orifices (41) for receiving spent fog from the fog screen (6);
**characterized** by: said expirator device (2) comprising a base (21) said base having a built-in water tank acting as said water supply means, said base (21) supporting said vertically extending air nozzles (7,7') and vertically extending fog outlet (8); and in that
said aspirator device (3) includes carrier means for converting the fog aspirated through said aspirating orifices (41) into water.

2. The apparatus of Claim 1, wherein said air curtains are space apart a distance of from 30 to 100 mm.

3. The apparatus of Claim 2, wherein said fog screen has a mean water particle diameter in the range of from 10 to 30 microns.

4. The apparatus of Claim 2, wherein said fog screen has a mean water particle diameter less than 10 microns.

5. A method of forming a fog screen (1) for the display thereon of an optical image projected from a projector (4) comprising providing:
an expirator device (2) having a pair of spaced vertically extending air nozzles (7,7'), fan means (22, 22') supplying air under pressure to said air nozzles (7, 7') to form a pair of spaced and parallel extending curtains (5, 5') of air, a vertically extending fog outlet (8) between said air nozzles (7,7'), fog generating nozzle means generating fog (6) from water supply means and expelling it through said fog outlet (8) to form a fog screen (6) in the space between said air curtains (5, 5'); and providing an aspirator device (3) spaced horizontally from said expirator device (2), said aspirator device having a plurality of aspirating orifices (41) receiving spent fog from the fog screen (6);
**characterized** by:
providing said expirator device (2) with a base (21) having a built-in water tank acting as said water supply means; using said base (21) to support said vertically extending air nozzles (7,7') and vertically extending fog outlet (8); and
employing carrier means in said aspirator device for converting fog aspirated through said aspirating orifices (41) into water.

6. The method of Claim 5, wherein said air curtains are spaced apart a distance of from 30 to 100 mm.

7. The method of Claim 6, wherein said fog screen has a mean water particle diameter in the range of from 10 to 30 microns.

8. The method of Claim 6, wherein said fog screen has a mean water particle diameter less than 10 microns.

## Revendications

1. Dispositif pour former un écran de brouillard (1) pour visualisation sur celui-ci d'une image optique projetée à partir d'un projecteur (4) comprenant :
un dispositif d'expiration (2) comportant une paire de buses d'air espacées s'étendant verticalement (7, 7'), un moyen de ventilateur (22, 22') pour délivrer l'air sous pression aux dites buses d'air (7, 7') afin de former une paire de rideaux d'air espacés et s'étendant parallèles (5, 5') un orifice de sortie de brouillard s'étendant verticalement (8) se trouvant entre lesdites buses d'air (7, 7'), un moyen de buse de production de brouillard pour produire le brouillard (6) à partir d'un moyen d'alimentation en eau et émettant celui-ci par l'intermédiaire de l'orifice de sortie de brouillard (8) afin de former un écran de brouillard (6) dans l'espace situé entre lesdits rideaux d'air (5, 5') et
un dispositif d'aspiration (3) espacé horizontalement dudit dispositif d'expiration (2), ledit dispositif d'aspiration (3) comportant une multitude d'orifices d'aspiration (41) pour recevoir le brouillard usé à partir de l'écran de brouillard (6) caractérisé par
ledit dispositif d'expiration (2) comprenant une base (21), ladite base ayant un réservoir d'eau intégré agissant comme ledit moyen d'alimentation en eau, ladite base (21) supportant lesdites buses d'air s'étendant verticalement (7, 7') et ledit orifice de sortie de brouillard s'étendant verticalement (8) ; et en ce que
ledit dispositif d'aspiration (3) comporte des moyens de support pour convertir le brouillard aspiré à travers lesdits orifices d'aspiration (41) en eau.

2. Dispositif selon la revendication 1, dans lequel lesdits rideaux d'air sont espacés d'une distance de 30 à 100 mm.

3. Dispositif selon la revendication 2, dans lequel ledit écran de brouillard présente un diamètre moyen de particules d'eau dans la plage de 10 à 30 µ.

4. Dispositif selon la revendication 2, dans lequel ledit écran de brouillard présente un diamètre moyen de particules d'eau inférieur à 10 µ.

5. Procédé pour former un écran de brouillard (1) pour visualisation sur celui-ci d'une image optique projetée à partir d'un projecteur (4) - comprenant la mise à disposition :
d'un dispositif d'expiration (2) comportant une paire de buses d'air espacées s'étendant verticalement (7, 7'), un moyen de ventilateur (22, 22') délivrant l'air sous pression aux dites buses d'air (7, 7') afin de former une paire de rideaux d'air espacés et s'étendant parallèle (5, 5'), un orifice de sortie de brouillard s'étendant verticalement (8) situé entre lesdites buses d'air (7, 7'), un moyen de buse de production de brouillard produisant le brouillard (6) à partir du moyen d'alimentation en eau et émettant celui-ci par l'intermédiaire dudit orifice de sortie de brouillard (8) pour former un écran de brouillard (6) dans l'espace situé lesdits rideaux d'air (5, 5') ; et la mise à disposition d'un dispositif d'aspiration (3) espacé horizontalement dudit dispositif d'expiration (2), ledit dispositif d'aspiration comportant une multitude d'orifices d'aspiration (41) recevant le brouillard usé à partir de l'écran de brouillard (6) ;
caractérisé en ce que l'on munit
ledit dispositif d'expiration (2) d'une base (21) ayant un réservoir d'eau intégré agissant comme ledit moyen d'alimentation en eau ; que l'on utilise ladite base (21) pour supporter lesdites buses d'air s'étendant verticalement (7, 7') et l'orifice de sortie de brouillard s'étendant verticalement (8) ; en ce que l'on employ les moyens de support dans ledit dispositif d'aspirateur pour convertir le brouillard aspiré à travers lesdits orifices d'aspiration (41) en eau.

6. Procédé selon la revendication 5, dans lequel lesdits rideaux d'air sont espacés d'une distance de 30 à 100 mm.

7. Procédé selon la revendication 6, dans lequel ledit écran de brouillard présente un diamètre moyen de particules d'eau dans la plage de 10 à 30 µ.

8. Procédé selon la revendication 6, dans lequel ledit écran de brouillard présente un diamètre moyen de particules d'eau inférieur à 10 µ.

## Patentansprüche

1. Vorrichtung zum Ausbilden eines Nebelprojektionsschirms (1) zur Anzeige eines optischen Bildes auf diesem, das von einem Projektor (4) projiziert wird, mit:
einer Ausblaseinrichtung (2) mit zwei beabstandeten, sich vertikal erstreckenden Luftdüsen (7, 7'), einer Gebläseeinrichtung (22, 22') zum Zuführen von Druckluft zu den Luftdüsen (7, 7') zum Ausbilden von zwei beabstandeten und sich parallel erstreckenden Luftvorhängen (5, 5'), einem sich vertikal erstreckenden Nebelauslaß (8) zwischen den Luftdüsen (7, 7'), einer nebelerzeugenden Düseneinrichtung zum Erzeugen von Nebel (6) von einer Wasserzuführeinrichtung und zum Ausstoßen des Nebels durch den Nebelauslaß (8), um einen Nebelprojektionsschirm (6) in dem Zwischenraum zwischen den Luftvorhängen (5, 5') auszubilden; und einer Ansaugeinrichtung (3), die horizontal von der Ausblaseinrichtung (2) beabstandet ist, wobei die Ansaugeinrichtung (3) mehrere Ansaugöffnungen (41) zur Aufnahme des verbrauchten Nebels von dem Nebelprojektionsschirm (6) aufweist;
dadurch **gekennzeichnet**, daß die Ausblaseinrichtung (2) eine Basis (21) aufweist, die einen eingebauten Wassertank besitzt, der als Wasserzuführeinrichtung dient, wobei die Basis (21) die sich vertikal erstreckenden Luftdüsen (7, 7') und den sich vertikal erstreckenden Nebelauslaß (8) lagert; und daß
die Ansaugeinrichtung (3) eine Trägereinrichtung zum Umwandeln des durch die Ansaugöffnungen (41) angesaugten Nebels in Wasser aufweist.

2. Vorrichtung nach Anspruch 1, wobei die Luftvorhänge um einen Abstand von 30 bis 100 mm voneinander beabstandet sind.

3. Vorrichtung nach Anspruch 2, wobei der Nebelprojektionsschirm einen durchschnittlichen Wasserpartikeldurchmesser im Bereich von 10 bis 30 µm aufweist.

4. Vorrichtung nach Anspruch 2, wobei der Nebelprojektionsschirm einen durchschnittlichen Wasserpartikeldurchmesser von weniger als 10 µm aufweist.

5. Verfahren zum Ausbilden eines Nebelprojektionsschirms (1), um auf diesem ein optisches Bild darzustellen, das von einem Projektor (4) projiziert wird, wobei vorgesehen wird:
eine Ansaugeinrichtung (2) mit zwei beabstandeten, sich vertikal erstreckenden Luftdüsen (7, 7'), einer Gebläseeinrichtung (22, 22'), die den Luftdüsen (7, 7') Druckluft zuführt, um zwei beabstandete und sich parallel erstreckende Luftvorhänge (5, 5') zu bilden, einen sich vertikal erstreckenden Nebelauslaß (8) zwischen den Luftdüsen (7, 7'), einer Nebelerzeugungsdüseneinrichtung, die Nebel (6) von einer Wasserzuführeinrichtung erzeugt und diesen durch den Nebelauslaß (8) ausbläst, um einen Nebelprojektionsschirm (6) in dem Zwischenraum zwischen den Luftvorhängen (5, 5') auszubilden; und wobei eine Ansaugeinrichtung (3) vorgesehen wird, die horizontal von der Ausblaseinrichtung (2) beabstandet ist, wobei die Ansaugeinrichtung mehrere Ansaugöffnungen (41) aufweist, die verbrauchten Nebel von dem Nebelprojektionsschirm (6) aufnehmen;
**gekennzeichnet** durch Versehen der Ausblaseinrichtung (2) mit einer Basis (21), die einen eingebauten Wassertank aufweist, der als Wasserzuführeinrichtung dient; Verwenden der Basis (21), um die sich vertikal erstreckenden Luftdüsen (7, 7') und den sich vertikal erstreckenden Nebelauslaß (8) zu lagern; und Verwenden einer Trägereinrichtung in der Ansaugeinrichtung zum Umwandeln des durch die Ansaugöffnungen (41) angesaugten Nebels in Wasser.

6. Verfahren nach Anspruch 5, wobei die Luftvorhänge um einen Abstand zwischen 30 und 100 mm voneinander beabstandet sind.

7. Verfahren nach Anspruch 6, wobei der Nebelprojektionsschirm einen durchschnittlichen Wasserpartikeldurchmesser im Bereich vom 10 bis 30 µm aufweist.

8. Verfahren nach Anspruch 6, wobei der Nebelprojektionsschirm einen durchschnittlichen Wasserpartikeldurchmesser kleiner als 10 µm aufweist.
